# EUROPEAN PATENT APPLICATION

(11) **EP 4 362 232 A1**
(43) Date of publication of application: **01.05.2024**
(21) Application number: 23192927.4
(22) Date of filing: 23.08.2023
(51) Int. Cl.: H01R 4/48, H01R 25/14, H01R 13/11

(54) **CONNECTION DEVICE FOR CONNECTING A PLURALITY OF BUSBARS WITH ROUNDED END CROSS-SECTIONS**

(30) Priority: 24.10.2022 CN 202211305273
(71) Applicant: ABB Schweiz AG, 5400 Baden (CH)
(72) Inventor: QIU, Xuedong, Xiamen, Fujian, 361101 (CN); ZhiAn, WANG, Xiamen, Fujian, 361000 (CN)
(74) Representative: Zimmermann & Partner Patentanwälte mbB

(57) **Abstract**

The present disclosure relates to a connection device for connecting a plurality of busbars with rounded end cross-sections, the connection device comprising: a plug-in mechanism with at least two cylindrical ends, wherein each end has a claw and the corresponding busbar is adapt to plug into the end; and a locking mechanism adapted to cooperate with the claw to lock the claw and the corresponding busbar. Through the connection device for connecting a plurality of busbars with rounded end cross-sections according to the present disclosure, the number of components used to connect the busbars can be significantly reduced. A large number of screws and electric field shielding parts are not required. The process of flattening the two ends of the busbars is omitted. The connection of the busbars is simplified, fast and reliable, and the work efficiency is improved.

## Description

### CROSS REFERENCE TO RELATED APPLICATIONS

This application requires priority of the Chinese patent application with the filing date of October 24, 2022 and the application number of 202211305273.8 which is incorporated by reference herein.

### FIELD

The present disclosure relates to a connection device for busbars, in particular to a connection device for connecting a plurality of busbars with rounded end cross-sections.

### BACKGROUND

Busbars are well known and are widely used on cable trays, in electrical equipment such as switch cabinets, etc., for the transmission of electric power. Usually a large number of busbars are used and need to be connected to each other. For this reason, a bus connection device has been developed, which connects the two ends of the busbar to be connected together with screws, and then tightens them with nuts.

However, such busbar connection requires a large number of screws, especially when there are a large number of busbars. Moreover, if the busbars are not flat, but cylindrical for example, the two ends of the busbars to be connected need to be flattened, which adds a process and takes time. In addition, the screws used to connect the busbars can cause inhomogeneity in the electric field near the ends of the busbars. In order to avoid electric field inhomogeneity, additional electric field shielding is also required.

### SUMMARY

The object of the present disclosure is to provide a connection device for connecting a plurality of busbars with rounded end cross-sections, which at least partially solves the aforementioned problems of the prior art.

In order to achieve the above object, according to the present disclosure, the connection device for connecting a plurality of busbars with rounded end cross-sections comprises: a plug-in mechanism with at least two cylindrical ends, wherein each end has a claw and the corresponding busbar is adapt to plug into the end; and a locking mechanism adapted to cooperate with the claw to lock the claw and the corresponding busbar.

Through the connection device for connecting a plurality of busbars with rounded end cross-sections according to the present disclosure, the number of components used to connect the busbars can be significantly reduced. A large number of screws and electric field shielding parts are not required. The process of flattening the two ends of the busbars is omitted. The connection of the busbars is simplified, fast and reliable, and the work efficiency is improved.

In one embodiment of the present disclosure, the end has a threaded part adjacent to the claw, and the threaded part has an external thread on its outer circumference. Here, the end uses the external thread of its threaded part to cooperate with the locking mechanism, so as to realize the insertion or disconnection of the busbar.

In one embodiment of the present disclosure, the locking mechanism has a cylindrical screwing part and a hollow frustoconical clamping part, which are adjacent to each other and integrated. The locking mechanism cooperates with the threaded part of the end through the screwing part, and cooperates with the claw by using the clamping part, so as to realize locking or releasing the busbar when the busbar is plugged in.

In one embodiment of the present disclosure, the screwing part has an internal thread on its inner circumference, and the internal thread is adapted to engage with the external thread of the threaded part, so that the claw is grippable. In this way, the claws can be easily gripped or expanded, thereby locking or releasing the busbar.

In one embodiment of the present disclosure, the inner diameter of the screwing part is equal to the inner diameter of the end side of the clamping part close to the screwing part, and the inner diameter of the screwing part is greater than the inner diameter of the end side of the clamping part away from the screwing part. In this way, the claws can be gradually gripped or expanded, and then the clamping force of the claws can be adjusted steplessly and smoothly, so as to lock the busbar to any desired level.

In one embodiment of the present disclosure, the plug-in mechanism has a heat dissipation hole. Through the heat dissipation hole, the heat generated by the current flowing through the busbar during operation can be dissipated, in order to ensure the reliable operation of the busbar.

In one embodiment of the present disclosure, the locking mechanism comprises at least two expansion parts, an adjustment part and a transmission part connected between the adjustment part and the expansion part, wherein the adjustment part, via the transmission part, enables the expansion part to enter the corresponding claw, so that the claw is expandable. This is another implementation of the locking mechanism, that is, the locking or releasing of the busbar is realized by expanding the claw from the inside.

In one embodiment of the present disclosure, the transmission part comprises a linearly movable joint, at least two linkages and at least two connecting means, wherein the joint and the corresponding linkages are respectively connected to the expansion part through the corresponding connecting means. In this way, the transmission part effectively cooperates with the expansion part and the adjustment part, and then skillfully realizes the coordination of these three parts.

In one embodiment of the present disclosure, the adjustment part is rotatably connected with the joint, so that by the rotation of the adjustment part, the joint is linearly movable and the linkages move close to each other or move away from each other. In this way, the adjusting part can be used to adjust the level of tightness of the busbar as required.

In one embodiment of the present disclosure, the linkage is pivotable about one end and is slidably connected to the joint at the other end. This is a simple mechanical connection. In this way, it is convenient to convert the rotation of the adjusting part into the pivoting of the linkage and the movement of the joint, and then drive the expansion part to move, so as to realize the adjustment of the clamping force of the busbar.

According to another aspect, the present disclosure also relates to a busbar having a rounded end cross-section, which is connectable to another busbar by means of the aforementioned connection device. The aspects and advantages described above with respect to the connection device are correspondingly also applicable to the busbar, and the details are omitted here.

According to another aspect, the present disclosure also relates to an electrical device comprising the aforementioned busbar. The aspects and advantages described above with respect to the connection device are correspondingly also applicable to the electrical device, and the details are omitted here.

### BRIEF DESCRIPTION OF THE DRAWINGS

Other advantages and designs of the present disclosure are described in detail below with reference to the accompanying drawings, wherein:
FIG. 1a is a schematic diagram of busbar connection in a switch cabinet according to the prior art;
FIG. 1b is a perspective view of connecting two busbars using a connection device according to the prior art;
FIG. 1c is a perspective view of connecting three busbars using a connection device according to the prior art;
FIG. 2 is a schematic diagram of a busbar connection in ta switch cabinet according to the present disclosure;
FIG. 3a is a schematic diagram of connecting three busbars using the connection device of the present disclosure according to an embodiment;
FIG. 3b is an exploded perspective view of connecting three busbars using the connection device of the present disclosure according to the embodiment shown in FIG. 3a;
FIG. 3c is a sectional view of connecting three busbars using the connection device of the present disclosure according to the embodiment shown in FIG. 3a;
FIG. 4a is a schematic diagram of connecting two busbars using the connection device of the present disclosure according to the embodiment shown in FIG. 3a;
FIG. 4b is a schematic diagram of connecting four busbars using the connection device of the present disclosure according to the embodiment shown in FIG. 3a;
FIG. 5 is an exploded perspective view of connecting three busbars using the connection device of the present disclosure according to another embodiment;
Fig. 6 is a cross-sectional view of connecting three busbars using the connection device of the present disclosure according to the embodiment shown in FIG. 5;
FIG. 7 is another cross-sectional view of connecting three busbars using the connection device of the present disclosure according to the embodiment shown in FIG. 5.

### DETAILED DESCRIPTION OF EMBODIMENTS

Corresponding reference signs and symbols in the different figures generally refer to corresponding regions, unless otherwise indicated. The figures are drawn to clearly illustrate the relevant aspects of the embodiments and are not drawn to scale. The edges of features in the figures do not necessarily denote the end of the range of the feature.

In the following description, various specific details are shown in order to provide a thorough understanding of various examples of embodiments according to the description. Embodiments may be implemented without one or more of the specific details, or with other methods, components, materials, etc. In other instances, known structures, materials, or operations are not shown or described in detail but do not affect the embodiments.

As used throughout the specification, the term "an embodiment" or "one embodiment" is intended to indicate that a specific configuration, structure, or characteristic described with respect to the embodiment is included in at least one embodiment. Thus, the terms such as "in an embodiment" "in one embodiment" that may appear in various aspects of this specification do not necessarily all refer to exactly the same embodiment. Furthermore, specific configurations, structures or characteristics may be combined in any suitable manner in one or more embodiments.

The reference signs used herein are provided for the convenience of reading, and thus do not limit the scope of protection or the scope of the embodiments. Identical or similar elements are identified with the same reference sign.

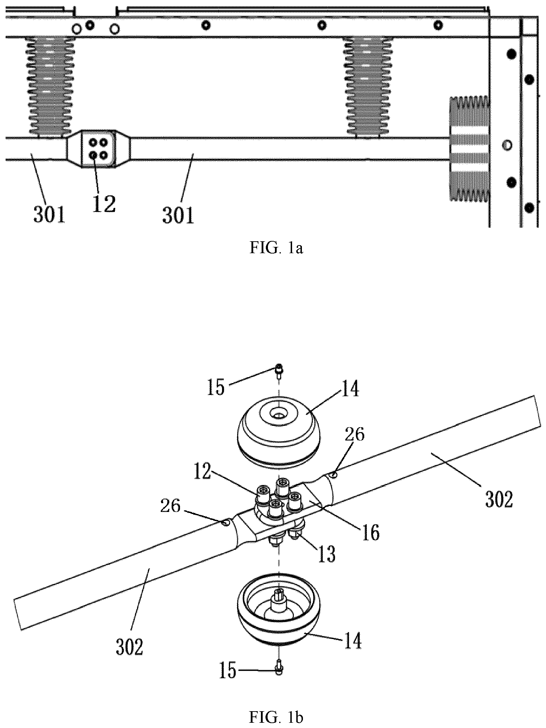

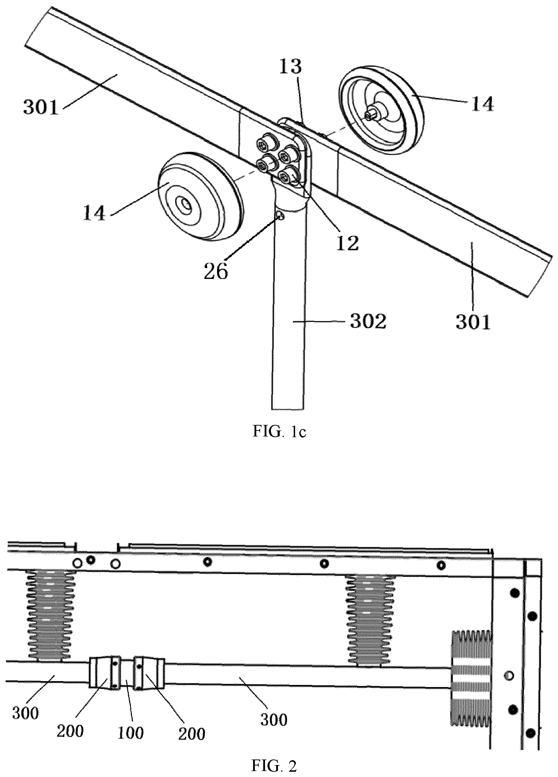

Firstly, referring to FIG. 1a to FIG. 1c, the situation of connecting busbars using the connection device according to the prior art will be described. FIG. 1a exemplarily shows the method of connecting the busbars used in the switchgear for power transmission. As shown, two full flat busbars 301 are connected to each other by four screws 12 at their respective ends. But the busbar is not limited to the full flat busbar 301. In recent years, busbars with rounded end cross-sections, such as cylindrical busbars, have also appeared, which are increasingly widely used due to their excellent current-carrying capacity, structural strength and insulation performance. It is no longer possible to connect such busbars with rounded end cross-sections using only screws. In order to connect busbars with rounded end cross-sections, people refer to the method of full-flat busbars 301 to flatten the ends of the busbars with rounded end cross-sections, and then connect and fix them with screws. The method for connecting the busbars with rounded end cross-sections is shown in FIG. 1b, where two flat busbars 302 with rounded end cross-sections can be seen, they are arranged in a "straight line" shape, and are provided with a heat dissipation hole 26 for dissipating the heat caused by the current flowing through them. The two busbars 302 are connected to each other at their flat ends 16 with four screws 12 and tightened and fixed with nuts 13. On the other hand, however, these screws 12 cause inhomogeneity in the electric field at the flat ends 16. In order to solve this problem, an additional electric field shield 14 made of aluminum is used and fixed at the flat end 16 with a fixing means 15, covering the screw 12. This connection and fixing method can also be used to connect three or more busbars, and can also be used to connect a full flat busbar 301 with an end flat busbar 302 with rounded end cross-sections, as shown in FIG. 1c, wherein two full flat bus bars 301 and one end flat bus bar 302 form a "T" shape.

As mentioned above, the busbar fixing method using screws has many disadvantages, such as the large number of parts used for fixing, the increase of the flattening process of the busbar end, and the need for additional electric field shielding parts, etc. In order to solve these problems in the prior art, the present disclosure provides a new busbar connection device for connecting a plurality of busbars 300 with rounded end cross-sections, such as cylindrical busbars. Exemplary embodiments of the busbar connection device according to the present disclosure will be described in detail below with reference to FIG. 2 to FIG. 7.

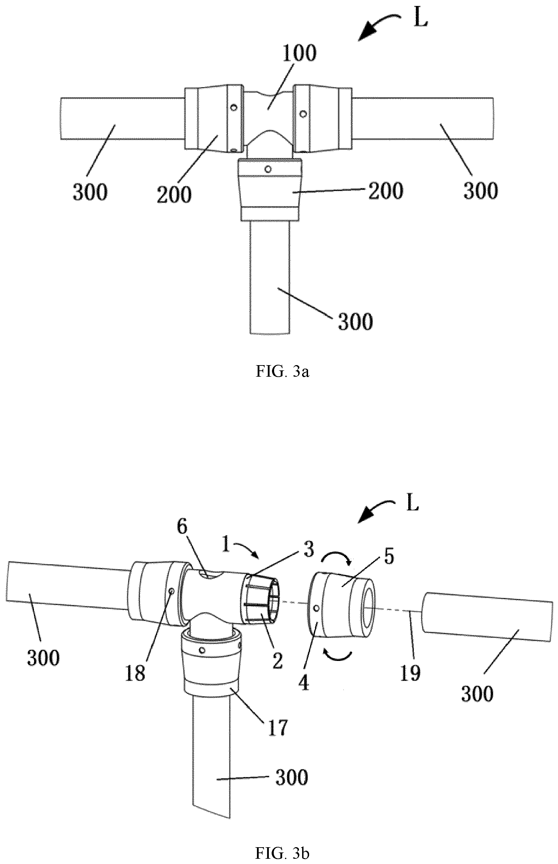

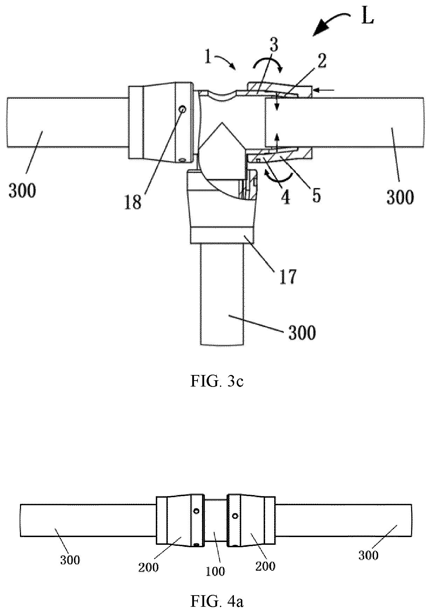

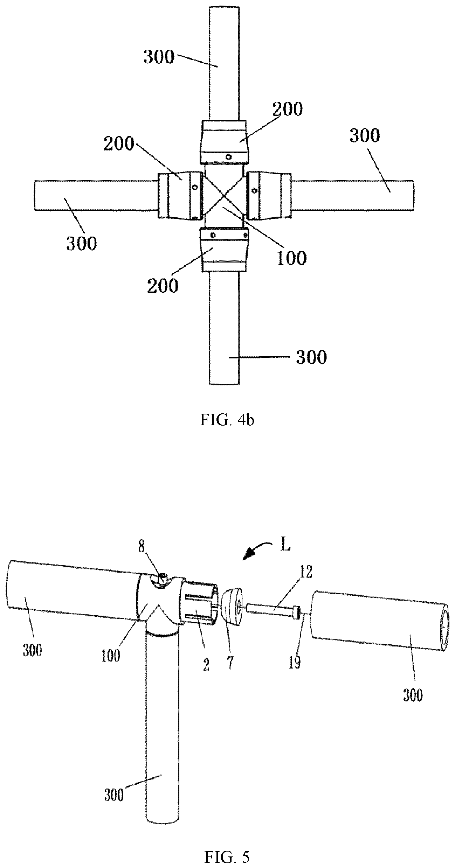

Referring to FIG. 2, it shows the connection of two generally copper busbars 300 with rounded cross-sections or with rounded end cross-sections, for example in a switchgear, using the busbar connection device according to the present disclosure. That is to say, the busbar connection device according to the present disclosure can be used for busbars having a circular cross-section throughout, but also for busbars having a circular cross-section only at the ends. However, it should be pointed out that the busbar connection device according to the present disclosure can also be applied in any other electrical equipment using busbars or on cable trays, and the present disclosure is not limited thereto. As shown in FIG. 2, the connection device L for connecting a plurality of busbars 300 with rounded end cross-sections according to the present disclosure includes a plug-in mechanism 100 and a locking mechanism 200. Two busbars 300 are plugged into the plug-in mechanism 100 respectively, and then the two busbars 300 are locked by the locking mechanism 200. In addition to forming two busbars 300 in a "straight line" shape (see also FIG. 4a), the connection device L can also be used to connect three busbars 300, for example forming a "T" shape as shown in FIG. 3a, or four busbars 300 forming a "cross" shape as shown in FIG. 4b. It is also conceivable to connect busbars 300 arranged in "Y" shape, "X" shape, radial shape etc., and even more busbars 300.

Next, in conjunction with FIG. 3b and FIG. 3c, the specific structure of the connection device L for connecting a plurality of busbars 300 with rounded end cross-sections shown in FIG. 3a will be described in detail. Here, the plug-in mechanism 100 forms a "T" shape, and has three cylindrical ends 1 for connecting with three busbars 300 with rounded end cross-sections. It can also be seen that the plug-in mechanism 100 is provided with a heat dissipation hole 6 for dissipating the heat generated by the current flowing through the busbar 300 during operation. The end 1 has a claw 2 and a threaded part 3, the claw 2 is adjacent to the threaded part 3, and multiple claws 2 are separated from each other by slits. The claw 2 can be formed, for example, by opening a plurality of slits on the end 1, so as to be flush with the threaded part 3. However, the claw 2 can also be slightly inclined radially inwards relative to the threaded part 3, for example by 2°. The threaded part 3 has an external thread on its outer circumference. When using the connection device L of the present disclosure, each busbar 300 is inserted into the corresponding end 1, specifically into the claw 2, and can be further inserted into the threaded part 3, or even deeper.

After the plug-in mechanism 100 utilizes each end 1 to connect the corresponding busbar 300, the locking mechanism 200 is used to lock the busbar 300. In the embodiment shown in FIG. 3b, the locking mechanism 200 has a cylindrical screwing part 4 and a hollow truncated conical clamping part 5, and optionally also has an abutting part 17 for abutting against the busbar 300. The screwing part 4 and the clamping part 5 are coaxially adjacent to each other and integrally formed. The inner diameter of the screwing part 4 is equal to the inner diameter of the end side of the clamping part 5 close to the screwing part 4, and the inner diameter of the screwing part 4 is greater than the inner diameter of the end side of the clamping part 5 away from the screwing part 4. This means that the clamping part 5 is slightly inclined radially inwardly relative to the screwing part 4, namely relative to the longitudinal axis 19 of the locking mechanism 200, for example by 5°. It should be noted here that if the claw 2 is inclined relative to the threaded part 3, its inclination angle must be smaller than the inclination angle of the clamping part 5 relative to the screw part 4, in order to ensure that the claw 2 can be clamped and moved closer by the clamping part 5. The screwing part 4 has an internal thread on its inner circumference, so the locking mechanism 200 as a whole forms a structure similar to a nut. When in use, the locking mechanism 200 is screwed onto the corresponding end 1, specifically the tightening tool is snapped into the screwing hole 18 provided on the screwing part 4 of the locking mechanism 200, and screwed toward the corresponding end 1 with force, so that the internal thread of the screwing part 4 is engaged with the external thread of the threaded part 3 of the end 1. During the screwing process, the clamping part 5 of the locking mechanism 200 gradually clamps the claw 2, so that the claw 2 can be moved radially inward, that is, toward the longitudinal axis 19 of the locking mechanism 200, until they abut and press against the busbar 300. In this way, the claw 2 and the corresponding busbar 300 are locked.

In the above embodiments, the locking mechanism 200 has a nut-type structure, and the locking of the busbar 300 is realized by making the claws 2 move inward in the radial direction. Another embodiment will be introduced below with reference to FIG. 5 to FIG. 7, wherein the locking of the busbar 300 is realized by making the claw 2 expand radially outward. In this embodiment as shown in FIG. 5 to FIG. 7, the locking mechanism 200 has another structure, specifically, it includes at least two expansion parts 7, an adjustment part 8 and a transmission part 9, and the transmission part 9 is connected between the adjustment part 8 and the expansion part 7. The expansion part 7 is approximately top-shaped here, and its diameter gradually increases from the end side facing the adjustment part 8 to the end side away from the adjustment part 8, and its smallest diameter is smaller than the inner diameter of the claw 2, and its largest diameter is greater than the inner diameter of the claw 2, so that the expansion part 7 can enter the corresponding claw 2 and expand the claw 2. In addition, the expansion part 7 is provided with a screw hole in the middle thereof, and the circumference of the screw hole is provided with threads. The adjustment part 8 is here, for example, a screw and is provided with a thread on its threaded rod 25. The threaded rod 25 passes through the stopper 20, and the stopper 20 is fixedly connected with the top wall of the plug-in mechanism 100 inside the plug-in mechanism 100 to prevent the adjustment part 8 from falling, so that only the manipulation end of the adjustment part 8 is exposed. The stopper 20 is also provided with holes at both ends. The transmission part 9 here comprises a linearly movable joint 10, at least two linkages 11 and at least two connecting means 12. The joint 10 is here for example T-shaped, but also can be other shapes, such as approximately conical, etc., and its end side facing the adjustment part 8 is provided with a screw hole for screwing the threaded rod 25 into the screw hole, and the two ends of the end side are provided with holes for inserting the first pin shaft 23. The two linkages 11 are respectively provided with sliding slots 24 passed by the first pin shaft 23 at the ends away from the stopper 20, so that the connecting rods 11 can be connected with the joint 10 when the first pin shaft 23 slides along the sliding slots 24. The two linkages 11 are also respectively provided with holes at the other ends. The hole at the other end is aligned with the hole at the end of the stopper 20 and passed through by the second pin shaft 21, so that the linkage 11 can be connected to the stopper 20 at the other end and can pivot around the second pin shaft 21 at the other end. Here, the stop 20 and the two linkages 11 form a triangle. But it is also possible that the stopper 20 is not connected to the two linkages 11. In this case, the second pin shaft 21 can be fixed on the top wall of the plug-in mechanism 100 inside the plug-in mechanism 100, so that the pivoting of the linkage 11 around the second pin shaft 21 can also be ensured. The joint 10 and the two linkages 11 are respectively connected to the expansion part 7 through the connecting means 12. The connecting means 12 can be, for example, rods or any other suitable components, and the number thereof is the same as the number of busbars 300 to be connected.

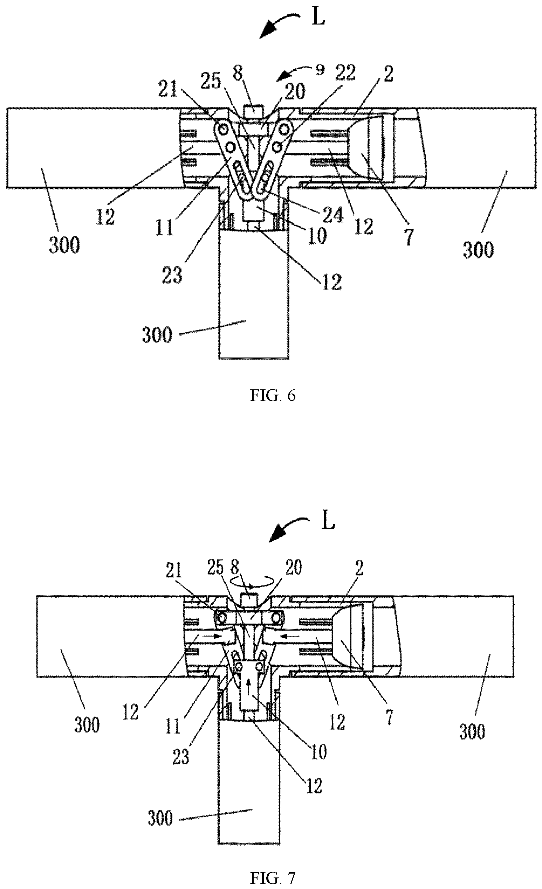

The operation of the locking mechanism 200 in another embodiment will be described below. Referring to FIG. 7, when the adjustment part 8 is rotated counterclockwise, the joint 10 moves linearly upward through the rotation of the screw 25 in the screw hole of the joint 10, and then the expansion part 7 in the corresponding vertical busbar 300 is also moved linearly upward through the connecting means 12 connected to the joint 10, so that the expansion part 7 enters its corresponding claw 2, causing the claw 2 to expand gradually, thereby pressing the claw 2 against the cylindrical vertical busbar 300 in the radial direction from inside to outside on, realizing the locking of the vertical busbar 300. At the same time, the first pin shaft 23 on the joint 10 slides in the sliding slot 24 on the linkage 11, so that the two linkages 11 move closer to each other, and then drive the left and right connecting means 12 to move horizontally and straightly towards each other, so that the two expansion parts 7 respectively connected to the two connecting means 12 also move closer to each other and enter into the respective corresponding claws 2, so that the two horizontal claws 2 are also gradually expanded, and the two horizontal claws 2 are radially pressed from the inside to the outside to the two corresponding cylindrical horizontal busbar 300, thus the claw 2 and the two horizontal busbars 300 are locked. When releasing the busbar 300, the operation process is reversed to the above. Thus, by converting the rotational movement of the adjustment part 8 into the linear movement of the expansion part 7 via the transmission part 9, the busbar 300 can be locked or released.

According to another aspect, the present disclosure also relates to a busbar 300 having a rounded end cross-section, which can be connected to each other by means of the aforementioned connection means L. The aspects and advantages described above with respect to the connection device are correspondingly also applicable to the busbar, and the details are omitted here.

According to another aspect, the present disclosure also relates to an electrical device comprising the aforementioned busbar. The aspects and advantages described above with respect to the connection device are correspondingly also applicable to the electrical device, and the details are omitted here. The electrical device according to the present disclosure is, for example but not limited to, a switch cabinet, a cable bridge, etc., and the busbar connection device according to the present disclosure is arranged in the switch cabinet, on the cable bridge, and the like.

From the disclosure and teaching presented in the foregoing descriptions and drawings, many modifications and other implementations will come to those skilled in the relevant art. Therefore, it is to be understood that the embodiments of the present disclosure are not to be limited to the specific embodiments disclosed herein, and modifications and other embodiments are also included in the present disclosure. Furthermore, while the above description and drawings describe example embodiments in the context of certain example combinations of components and/or functions, it should be appreciated that different combinations of components and/or functions may be provided by alternative embodiments without departing from the scope of the present disclosure. In this regard, for example, other combinations of components and/or functions than those expressly described above are also contemplated to be within the scope of the present disclosure. Although specific terms are used herein, they are used in a generic and descriptive sense and are not intended to be limiting.

## Claims

1. A connection device (L) for connecting a plurality of busbars (300) with rounded end cross-sections, the connection device comprising:
a plug-in mechanism (100) with at least two cylindrical ends (1), wherein each end (1) has a claw (2) and the corresponding busbar (300) is adapt to plug into the end; and
a locking mechanism (200) adapted to cooperate with the claw (2) to lock the claw (2) and the corresponding busbar (300).

2. The connection device (L) according to claim 1, wherein the end (1) has a threaded part (3) adjacent to the claw (2), and the threaded part (3) has an external thread on its outer circumference.

3. The connection device (L) according to claim 2, wherein the locking mechanism (200) has a cylindrical screwing part (4) and a hollow frustoconical clamping part (5), which are adjacent to each other and integrated.

4. The connection device (L) according to claim 3, wherein the screwing part (4) has an internal thread on its inner circumference, and the internal thread is adapted to engage with the external thread of the threaded part (3), so that the claw (2) is grippable.

5. The connection device (L) according to claim 3, wherein the inner diameter of the screwing part (4) is equal to the inner diameter of the end side of the clamping part (5) close to the screwing part (4), and the inner diameter of the screwing part (4) is greater than the inner diameter of the end side of the clamping part (5) away from the screwing part (4).

6. The connection device (L) according to claim 1, wherein the locking mechanism (200) comprises at least two expansion parts (7), an adjustment part (8) and a transmission part (9) connected between the adjustment part (8) and the expansion part (7), wherein the adjustment part (8), via the transmission part (9), enables the expansion part (7) to enter the corresponding claw (2), so that the claw (2) is expandable.

7. The connection device (L) according to claim 6, wherein the transmission part (9) comprises a linearly movable joint (10), at least two linkages (11) and at least two connecting means (12), wherein the joint (10) and the corresponding linkages (11) are respectively connected to the expansion part (7) through the corresponding connecting means (12).

8. The connection device (L) according to claim 7, wherein the adjustment part (8) is rotatably connected with the joint (10), so that by the rotation of the adjustment part (8), the joint (10) is linearly movable and the linkages (11) move close to each other or move away from each other.

9. The connection device (L) according to claim 8, wherein the linkage (11) is pivotable about one end and is slidably connected to the joint (10) at the other end.

10. The connection device (L) according to any of the preceding claims, wherein the plug-in mechanism (100) has a heat dissipation hole (6).

11. A busbar (300) having a rounded end cross-section and being connectable to another busbar by means of a connection device (L) according to any of the preceding claims.

12. An electrical device comprising the busbar (300) according to claim 11.
